# EUROPÄISCHE PATENTSCHRIFT

(11) **EP 3 208 230 B1**
(45) Veröffentlichungstag und Bekanntmachung des Hinweises auf die Patenterteilung: **13.09.2023**
(21) Anmeldenummer: 17000267.9
(22) Anmeldetag: 20.02.2017
(51) Int. Cl.: G05D 11/13, B67D 7/34, B67D 7/02, B67D 7/10, B67D 7/14, B67D 7/30, B67D 7/32, B67D 7/74

(54) **DOSIEREINRICHTUNG UND VERFAHREN ZUM BETREIBEN DER DOSIEREINRICHTUNG**
DOSING DEVICE AND METHOD FOR OPERATING THE SAME
DISPOSITIF DE DOSAGE ET PROCÉDÉ D'EXPLOITATION DU DISPOSITIF DE DOSAGE

(30) Priorität: 18.02.2016 DE 102016102829
(43) Veröffentlichungstag der Anmeldung: 23.08.2017
(73) Patentinhaber: Saier, Michael, 79117 Freiburg / Kappel (DE); Saier, Beatrice, 79117 Freiburg / Kappel (DE)
(72) Erfinder: Saier, Michael, 79117 Freiburg / Kappel (DE); Saier, Beatrice, 79117 Freiburg / Kappel (DE)
(74) Vertreter: Roche, von Westernhagen & Ehresmann

(56) Entgegenhaltungen:
- WO-A1-2014/015186
- WO-A2-2010/078084
- WO-A2-2011/089205
- US-A- 5 488 447
- US-A1- 2002 124 907
- US-A1- 2007 044 819
- US-A1- 2009 194 562

## Beschreibung

Die Erfindung betrifft zunächst eine Dosiereinrichtung nach dem Oberbegriff des Anspruches 1.

Eine solche Dosiereinrichtung ist druckschriftlich nicht belegbar, aber im Stand der Technik bekannt. Mit den bekannten Dosiereinrichtungen können Zielgefäße, die beispielsweise als Putzeimer ausgebildet sind, oder als eine Mopp-Aufbereitungsanlage, z. B. mit einer Reinigungsflüssigkeit befüllt werden.

An die Dosiereinrichtung kann ein Behältnis angeschlossen werden, in dem ein zu dosierendes Medium, beispielsweise eine hochkonzentrierte Reinigungsflüssigkeit, angeordnet ist. Die Dosiereinrichtung kann in Folge der Initiierung eines Dosiervorganges ein vorherbestimmtes Volumen der hochkonzentrierten Reinigungsflüssigkeit einem Auslass zuführen. Gegebenenfalls kann das Reinigungskonzentrat auch mit Wasser oder mit anderen Reinigungsmittelbestandteilen gemischt werden.

An der Dosiereinrichtung des Standes der Technik kann eine Bedieneinrichtung angeordnet sein, mit der eine Bedienperson das Steuergerät ansprechen kann, um einen Dosiervorgang zu initiieren. Das Steuergerät kann beispielsweise eine an der Dosiereinrichtung angeordnete Pumpe ansprechen, um die vorgegebene Menge des Mediums durch die Dosiereinrichtung hindurch hin zu dem Zielgefäß zu fördern.

In dem die Erfindung interessierenden Bereich der Gebäudetechnik werden zu Reinigungs- und/oder zu Desinfektionszwecken unterschiedliche Reinigungsflüssigkeiten und/oder unterschiedliche Desinfektionslösungen verwendet. Dabei können unterschiedlich ausgebildete und/oder unterschiedlich große Gefäße eingesetzt werden, um die Reinigungslösungen oder Desinfektionslösungen vor Ort zu entnehmen. Bekannt sind und verwendet werden beispielsweise Putzeimer, handgetragene Fläschchen, Sprühfläschchen, etc.

Insbesondere bei größeren Objekten ist es im Hinblick auf eine gewünschte Standardisierung der Arbeitsprozesse bekannt, für unterschiedliche Arbeitszwecke unterschiedliche Gefäße mit unterschiedlichen Farben einzusetzen. Dabei kann vorgesehen sein, dass für die Reinigung von Holzfußböden, z. B. Parkett, grundsätzlich eine Anweisung für die Reinigungskräfte besteht, nur Putzeimer einer ersten Farbe, z. B. der Farbe rot, zu verwenden. Zugleich kann die Anweisung bestehen, zur Reinigung anderer Arten von Böden, beispielsweise von Linoleumböden, grundsätzlich nur Putzeimer einer anderen Farbe, z. B. der Farbe grün, einzusetzen.

Mit dieser Anweisung, zur Reinigung unterschiedlicher Arten von Gebäudeflächen, unterschiedlich farbige Gefäße einzusetzen, geht die Bestimmung einher, für diese unterschiedlichen, zu reinigenden Gebäudeflächenarten unterschiedliche Reinigungslösungen oder Desinfektionslösungen einzusetzen.

Dies kann beinhalten, dass die unterschiedlichen Reinigungslösungen unterschiedliche Bestandteile, also unterschiedliche Arten von Reinigungsmitteln, oder unterschiedliche Mischungen oder Mischungsverhältnisse unterschiedlicher Reinigungsmittelarten verwenden. Dies kann aber alternativ oder zusätzlich auch beinhalten, dass unterschiedliche Reinigungslösungen unterschiedliche Konzentrationen desselben Reinigungsmittelkonzentrates verwenden.

Durch die beschriebene farbliche Codierung der Gefäße unter Verwendung der Farbe des Gefäßes wird bereits eine gewisse Prozessstandardisierung und Prozesssicherheit erreicht. Dennoch kommt es gelegentlich zu Fehlern bei der Befüllung der Gefäße mit der gewünschten Reinigungs- oder Desinfektionslösung.

Hier setzt die Erfindung ein: Der Erfindung stellt sich die Aufgabe, ausgehend von der beschriebenen Dosiereinrichtung des Standes der Technik, diese derartig weiterzubilden, dass eine erhöhte Prozesssicherheit möglich wird.

Die Erfindung löst diese Aufgabe mit den Merkmalen des Anspruches 1, insbesondere mit denen des Kennzeichenteils, und ist demgemäß dadurch gekennzeichnet, dass mit dem Steuergerät in Abhängigkeit von einer dem Steuergerät übermittelten Information über die Farbe des Zielgefäßes unterschiedliche Dosierprogramme durchführbar sind.

Das Prinzip der Erfindung besteht im Wesentlichen darin, eine Dosiereinrichtung bereitzustellen, die ein Steuergerät aufweist, dem mittelbar oder unmittelbar, codiert oder uncodiert, eine Information über die Farbe des Zielgefäßes vermittelt oder übermittelt werden kann. Die Erfassung der Farbe des Zielgefäßes kann entweder manuell erfolgen, indem an der Dosiereinrichtung eine Eingabevorrichtung angeordnet - oder der Dosiereinrichtung zugeordnet - ist, z. B. in Form eines Programmwahlschalters, der für unterschiedliche Farben des Zielgefäßes unterschiedliche Eingabemöglichkeiten oder unterschiedliche Schalterpositionen vorsieht.

Im einfachsten Fall kann die Eingabevorrichtung von einem Drehknebel gebildet sein, der unterschiedliche Drehstellungen einnehmen kann. Die Zahl der unterschiedlichen Drehstellungen kann dabei beispielsweise der Zahl der unterschiedlichen möglichen Farben der Zielgefäße entsprechen. Wird die Dosiereinrichtung z. B. in einem System eingesetzt, bei dem Zielgefäße dreier unterschiedlicher Farben eingesetzt werden, z. B. der Farben rot, blau und grün, genügt es, wenn der Drehknebel drei Drehpositionen einnehmen kann, die beispielsweise durch entsprechende Farbangaben gekennzeichnet sind.

Alternativ kann eine Erfassung der Information über die Farbe des Zielgefäßes auch durch eine Detektionseinrichtung erfolgen. So kann beispielsweise an der Dosiereinrichtung ein Farbsensor vorgesehen sein, der automatisch die Farbe des nahe an der Dosiereinrichtung positionierten Zielgefäßes aufnehmen und erkennen kann.

Die Eingabevorrichtung, bzw. die Detektionseinrichtung, kann die Informationen über die Farbe des Zielgefäßes an das Steuergerät übermitteln. Das Steuergerät steht mit einem Speicher in Verbindung, oder umfasst einen solchen Speicher, in dem unterschiedliche Dosierprogramme abgelegt sind, und zwar unter Bezug auf unterschiedliche Farben des Zielgefäßes.

Erhält das Steuergerät z. B. die Information, dass ein rotes Zielgefäß an der Dosiereinrichtung angeordnet ist und befüllt werden soll, kann es unter Rückgriff auf den Inhalt des Speichers die Informationen über das entsprechende Dosierprogramm auslesen, und das Dosierprogramm durchführen. In weiterer Abarbeitung des Dosierprogrammes kann das Steuergerät beispielsweise eine Pumpe ansprechen, die ein entsprechendes, im Dosierprogramm vorgegebenes, Volumen an Medium zu dem Zielgefäß hin fördert.

Erhält das Steuergerät hingegen z. B. die Information, dass ein blaues Zielgefäß an der Dosiereinrichtung angeordnet und zu befüllen ist, kann es unter Rückgriff auf den Inhalt des Speichers die Informationen über das - dem blauen Zielgefäß - entsprechende Dosierprogramm auslesen, und ein geändertes Dosierprogramm durchführen.

Durch die erfindungsgemäße Dosiereinrichtung wird die Prozesssicherheit erhöht. Es wird erreicht, dass für Zielgefäße einheitlicher Farbe auch einheitliche Reinigungslösungen bzw. einheitliche Desinfektionslösungen bereitgestellt und die Zielgefäße damit befüllt werden. Verwechselungen, bzw. Fehldosierungen oder Falschdosierungen sind damit ausgeschlossen.

Im Falle einer automatischen Erkennung der Farbe des Zielgefäßes durch die Detektionseinrichtung kann das ordnungsgemäße Dosierprogramm automatisch ausgewählt und/oder durchgeführt werden. Im Falle der Bereitstellung einer Bedieneinrichtung mit einem farbselektiven-Dosierprogrammwahlschalter wird gleichermaßen die Prozesssicherheit erhöht.

Die erfindungsgemäße Dosiereinrichtung erlaubt eine besonders einfache Ausbildung, sowohl der Dosiereinrichtung selbst, also auch der Zielgefäße. Insbesondere ist es nicht erforderlich auf weitaus kompliziertere Techniken zurückzugreifen, die beispielsweise erfordern würden, dass an den Zielgefäßen codierte RFID-Chips oder dergleichen angebracht sind. Insbesondere ein nachträgliches Ergänzen eines Satzes bestehender Zielgefäße einer Farbe ist völlig unkompliziert; es genügt hierzu, wenn Zielgefäße einer gleichen Farbe nachgeordert werden.

Die erfindungsgemäße Dosiereinrichtung umfasst Ausführungsbespiele, bei denen nur ein einziges Behältnis mit einem zu dosierenden Medium vorgesehen ist. Hier können unterschiedliche Dosierprogramme bewirken bzw. vorsehen, dass unterschiedlich farbigen Zielgefäßen unterschiedliche Volumina des zu dosierenden Mediums zugeführt werden. Damit sind beispielsweise unterschiedliche Reinigungsmittellösungen mit unterschiedlichen Konzentrationen herstellbar.

Die erfindungsgemäße Dosiereinrichtung umfasst sowohl Ausführungsbeispiele, bei denen dem Zielgefäß lediglich das zu dosierende Medium zugeführt wird, aber auch Ausführungsbeispiele, bei denen dem Zielgefäß das zu dosierende Medium - oder mehrere zu dosierende Medien -, und zugleich Wasser zugeführt wird. Hier kann eine Reinigungslösung durch Einstellung des voluminösen Verhältnisses von Reinigungsmittelkonzentrat und Wasser in einem vorgegebenen Verhältnis bereitgestellt werden.

Die erfindungsgemäße Dosiereinrichtung umfasst darüber hinaus Ausführungsbeispiele, bei denen an die Dosiereinrichtung auch zwei oder mehr Behältnisse mit gleichen oder mit unterschiedlichen Medien angeschlossen sind. Beispielsweise umfasst die erfindungsgemäße Dosiereinrichtung auch solche Ausführungsbeispiele, bei denen Stellglieder vorgesehen sind, mit denen jeweils nur einer von mehreren Einlässen, die mit unterschiedlichen Behältnissen kommunikativ verbunden sind, mit dem Auslass der Dosiereinrichtung in kommunikative Verbindung gebracht werden. Beispielsweise sind rotierende Stellglieder bekannt, wie sie in zahlreichen älteren Patentanmeldungen, die teilweise oder vollständig auf die Anmelder der vorliegenden Patentanmeldung zurückgehen, beschrieben.

Zum Zwecke der Vermeidung von Wiederholungen wird hiermit auf den Inhalt der folgenden Patentanmeldungen, auch zum Zwecke der Bezugnahme auf einzelne, dort offenbarte Merkmale von Dosiereinrichtungen, Stellgliedern, und Mischverteilvorrichtungen, in den Inhalt der vorliegenden Patentanmeldung verwiesen:
DE 10 2011 108 396.4, DE 10 2011 119 021.3, DE 10 2011 122 921.7, DE 10 2012 012 913.0, DE 10 2013 008 973.5, DE 10 2013 022 329.6, DE 10 2014 002 560.8, DE 10 2014 010 126.6, DE 10 2015 110 862.3, DE 10 2015 107 105.3, DE 10 2015 107 976.3 und DE 10 2015 122 565.4.

Als Farbe eines Zielgefäßes im Sinne der Erfindung wird insbesondere die Farbe eines Bereiches einer Wandung eines Zielgefäßes angesehen. Im Falle eines als Putzeimer ausgebildeten Zielgefäßes ist hiervon insbesondere die Farbe der umlaufenden Wand oder des Boden des Putzeimers umfasst.

Bei Ausführungsbeispielen der erfindungsgemäßen Dosiereinrichtung kann auch vorgesehen sein, dass ein Zielgefäß unterschiedliche Farben oder Farbkombinationen (z. B. gestreift, kariert, oder andere Muster, etc.) aufweist, und die Detektionseinrichtung diese unterschiedlichen Farbkombinationen oder Farbmuster erkennen kann.

Die erfindungsgemäße Dosiereinrichtung umfasst darüber hinaus Ausführungsbeispiele, bei denen die in dem Speicher für unterschiedliche Dosierprogramme abgespeicherten Dosierinformationen, z. B. die Dosiermengen, die Dosierzeitpunkte, zu dosierende Medien, Standort, etc., änderbar sind. So kann beispielsweise durch einen Zugriff auf den Speicher, z. B. durch eine an der Dosiereinrichtung angeordnete Schnittstelle, bei Bedarf eine Änderung oder Aktualisierung der zu den Dosierprogrammen abgelegten Dosierinformationen erfolgen.

Denkbar ist beispielsweise, dass, wenn ein Haustechniksystem um eine Gefäßreihe einer neuen Farbe ergänzt wird, eine entsprechende weitere, zusätzliche Dosierinformation für diese Farbe im Rahmen eines weiteren Dosierprogrammes im Speicher des Steuergerätes oder in einem Speicher der Dosiereinrichtung abgelegt wird.

Die Erfindung bezieht sich auf eine Dosiereinrichtung zur Bereitstellung einer Reinigungslösung oder einer Desinfektionslösung. Hierunter wird jede Lösung verstanden, die zur Anwendung in der Gebäudetechnik, insbesondere im Bereich der Gebäudereinigung, also zur Reinigung eines Gebäudes oder von Gebäudeteilen oder von Einrichtungsgegenständen, bzw. im Falle einer Desinfektionslösung zur Desinfektion von Gebäudeflächen oder zur Desinfektion von Personen oder Körperteilen geeignet ist.

Die erfindungsgemäße Dosiereinrichtung umfasst wenigstens einen Eingang zur Verbindung mit einem Behältnis, in dem ein zu dosierendes Medium angeordnet ist. Das zu dosierende Medium kann beispielsweise ein Reinigungsmittelkonzentrat, oder ein Konzentrat eines Desinfektionsmittels sein. Die Dosiereinrichtung weist wenigstens einen Eingang auf. Vorteilhafterweise weist die Dosiereinrichtung mehrere Eingänge auf. Die mehreren Eingänge können entweder jeweils mit einem Behältnis verbunden sein, in dem das gleiche, zu dosierende Medium angeordnet ist. Hierdurch kann beispielsweise, wenn ein Behältnis entleert wurde, durch ein Überspringen auf das zweite, noch gefüllte Behältnis ein Ausfall vermieden werden, bzw. ein komfortabler Wechsel des Behältnisses oder ein Nachfüllen des Mediums ermöglicht werden.

Von der Erfindung sind aber auch solche Dosiereinrichtungen umfasst, bei denen zwei oder mehrere Eingänge zur Verbindung mit Behältnissen vorgesehen sind, in denen unterschiedliche, zu dosierende Medien angeordnet sein können. Insbesondere kann vorgesehen sein, dass mit einer erfindungsgemäßen Dosiereinrichtung dafür gesorgt werden kann, dass sämtliche in dem Gebäude einzusetzende Reinigungs- oder Desinfektionslösungen oder ein Großteil davon von dieser Dosiereinrichtung bereitgestellt werden.

Schließlich kann bei einer Ausführungsform der erfindungsgemäßen Dosiereinrichtung auch vorgesehen sein, dass die Dosiereinrichtung mehrere Eingänge zur Verbindung mit unterschiedlichen Behältnissen aufweist, in denen unterschiedliche Medien angeordnet sind, wobei diese unterschiedlichen Medien jeweils dosiert, sukzessive einem Ausgang zugeführt werden können, um die unterschiedlichen Medien in einem Zielgefäß zu mischen.

Die erfindungsgemäße Dosiereinrichtung umfasst des Weiteren wenigstens einen Ausgang für ein Zielgefäß.

Das Zielgefäß ist das in der Gebäudetechnik einzusetzende Gefäß, oder ein in der Gebäudetechnik einzusetzendes Gerät oder eine Vorrichtung, die ein solches Gefäß oder Teilgefäß aufweist. Das Zielgefäß kann also beispielsweise unmittelbar ein Bodenreinigungsgerät sein, oder von einem Tank oder einem Behältnis für das Bodenreinigungsgerät gebildet sein. Das Zielgefäß kann auch eine Flaschenbefüllanlage, eine Mopp-Aufbereitungsanlage, oder ein Gefäß für Reinigungsflüssigkeit, im einfachsten Falle ein Eimer, oder eine Handsprühflasche sein.

Die erfindungsgemäße Dosiereinrichtung umfasst des Weiteren wenigstens eine Pumpe. Die Pumpe dient dazu, das zu dosierende Medium durch die Dosiereinrichtung hindurch, hin Richtung Zielgefäß, zu fördern. Als Pumpe einer Dosiereinrichtung im Sinne der vorliegenden Patentanmeldung wird jede geeignete Einrichtung zum Fördern des Mediums verstanden. Insbesondere werden hierunter Schlauchpumpen, Kreiselpumpen, Membranpumpen, aber zum Beispiel auch Vakuum-Saugdüsen, die nach dem Venturi-Prinzip arbeiten, oder andere Einrichtungen, die eine Förderung des Mediums vornehmen können, verstanden.

Weiter kann an der erfindungsgemäßen Dosiereinrichtung eine Bedieneinrichtung angeordnet sein. Mittels dieser Bedieneinrichtung kann durch eine Bedienperson ein Dosiervorgang initiiert werden. Die Bedieneinrichtung ist insbesondere an der Dosiereinrichtung fest angeordnet, oder fest relativ zu der Dosiereinrichtung angeordnet. Sie kann zum Beispiel an dem Gehäuse der Dosiereinrichtung angeordnet sein.

Aus WO 2011/089205 A2 geht ein Verfahren zur Bereitstellung von Medikamenten hervor. Es besteht die Möglichkeit einer Identifikation von Chemikalien. Eine Bestimmung einer Farbe eines Zielgefäßes geht aus der Druckschrift nicht hervor. Eine Übermittlung einer Information über die Farbe des Zielgerätes an das Steuergerät, um in Abhängigkeit dieser übermittelten Informationen unterschiedliche Dosierprogramme durchzuführen, ist nicht beschrieben. Gemäß der Druckschrift ist kodiertes Material nicht sichtbar ausgebildet, sondern emittiert ultraviolette oder Infrarotstrahlung.

Aus der US 2007/044819 A1 ist eine Dosiereinrichtung zur Abgabe von Chemikalien an eine Geschirrspülkammer bekannt. Die Geschirrspülmaschine benötigt zu unterschiedlichen Zeitpunkten unterschiedliche Chemikalien, die aus unterschiedlichen Containern zur Verfügung gestellt werden. Gemäß der Druckschrift weisen die Container Informationen in einem Datenträger auf, der ein Schwarz-Weiß-Code mit Informationsfeldern oder ein Barcode oder ein LFID-Tag sein kann. An der Dosiereinrichtung ist ein Datenlesegerät angeordnet. Die Druckschrift zeigt keine Dosiereinrichtung zur Bereitstellung einer Reinigungs- oder Desinfektionslösung zur Abgabe in ein Zielgefäß. Die Druckschrift offenbart auch keine Dosiereinrichtung, die für unterschiedliche Zielgefäße unterschiedliche Dosierprogramme durchführen kann. Die Druckschrift offenbart auch nicht, dass in Abhängigkeit von einer an ein Steuergerät übermittelten Information über eine Identifizierung des Zielgerätes unterschiedliche Dosierprogramme durchführbar sind.

Aus der US 2002/124907 A1 geht eine Vorrichtung hervor, bei der unterschiedliche Zielgefäße unterschiedliche Formkodierungsabschnitte aufweisen.

Aus der WO 2014/015186 A1 geht ein System zur Bereitstellung von Laborlösungen hervor. Die Druckschrift zeigt nicht, dass mit einem Steuergerät in Abhängigkeit von einer dem Steuergerät übermittelten Information über die Farbe des Zielgefäßes unterschiedliche Dosierprogramme durchführbar sind.

Die Bedieneinrichtung ist im einfachsten Fall ein Ein-/Ausschalter, der beim Betätigen, d. h. beim Einschalten, einen Dosiervorgang initiiert.

Gemäß einer vorteilhaften Ausgestaltung der Erfindung weist die Dosiereinrichtung einen Speicher auf. Als Speicher wird ein an sich bekannter, herkömmlicher, elektronischer Baustein bezeichnet, in dem Daten und Informationen abgelegt werden können.

Gemäß einer vorteilhaften Ausgestaltung der Erfindung ist an der Dosiereinrichtung eine Bedieneinrichtung zur manuellen Eingabe und/oder zur manuellen Auswahl der Farbe des Zielgefäßes oder einer Information über die Farbe des Zielgefäßes angeordnet. Die Bedieneinrichtung kann als Eingabevorrichtung ausgebildet sein, und beispielsweise die Eingabe eines alphanummerischen, die Farbe repräsentierenden Zeichens, wie beispielsweise des Wortes "rot" oder des Wortes "grün", ermöglichen. Alternativ kann ein Code oder eine Abkürzung, z. B. der Buchstabe R für die Farbe rot oder der Buchstabe G für die Farbe grün eingegeben werden. Die Bedieneinrichtung kann auch als Auswahlschalter ausgebildet sein, der in unterschiedlichen Positionen, z. B. unterschiedlichen Drehpositionen, auf entsprechend beschriftete Felder, die die Farbe anzeigen, eingestellt werden kann.

Als Bedieneinrichtung zur manuellen Eingabe und/oder zur manuellen Auswahl der Farbe des Zielgefäßes wird jede Einrichtung verstanden, die unter Zuhilfenahme einer Tätigkeit der Bedienperson die Farbinformation aufnimmt. Eine solche Bedieneinrichtung kann auch zusätzlich zu der zuvor schon erwähnten, und nachfolgend noch detaillierter beschriebenen, Detektionseinrichtung vorgesehen sein, beispielsweise um die Prozesssicherheit noch weiter zu erhöhen.

Gemäß einer alternativen Ausgestaltung der Erfindung ist der Dosiereinrichtung eine Detektionseinrichtung zugeordnet. Mit der Detektionseinrichtung kann die Farbe des Zielgefäßes automatisch aufgenommen und erkannt werden. Die Detektionseinrichtung kann beispielsweise einen farbselektiven Sensor umfassen, der z. B. durch eine bildliche Aufnahme die Farbe des Zielgefäßes sicher feststellen kann. Die Detektionseinrichtung kann auch einer Einrichtung zugeordnet sein, oder eine solche Einrichtung umfassen, die Licht - oder eine andere geeignete Art von elektromagnetischer Strahlung - aussendet, und an dem Zielgefäß reflektierte Lichtanteile oder Strahlungsanteile detektiert. Unter Umständen kann auch aus dem Reflektionsverhalten des Zielgefäßes von der Detektionseinrichtung - oder nachgeschaltet von der Steuerung - auf die Farbe des Zielgefäßes geschlossen werden.

Als Detektionseinrichtungen kommen insbesondere Farbmessgeräte in Betracht, mit denen Farbmaßzahlen mit hoher absoluter Genauigkeit gemessen werden können. Beispielsweise kommen LAB-Farbsensoren, True-Color-Sensoren, oder RGB-Sensoren in Betracht. Diese können den sichtbaren Spektralbereich selektiv erfassen, und bewerten. Derartige Geräte sind beispielsweise aus der Automatisierungstechnik bekannt.

Gemäß einer weiteren vorteilhaften Ausgestaltung der Erfindung ist die Bedieneinrichtung, bzw. ist die Detektionseinrichtung mit der Steuerung verbunden. Eine solche Verbindung ist eine logische Verbindung, bzw. eine signaltechnische Verbindung, und dient dazu, die von der Bedieneinrichtung, bzw. von der Detektionseinrichtung erhaltenen oder erarbeiteten Informationen über die Farbe des Zielgefäßes der Steuerung zu übermitteln.

Dies kann auch unter Zuhilfenahme geeigneter Intelligenz, beispielsweise geeigneter Prozessoren, durchgeführt werden.

Gemäß einer weiteren vorteilhaften Ausgestaltung der Erfindung ist der Dosiereinrichtung eine Positionierfläche für das Zielgefäß zugeordnet. Die Positionierfläche kann beispielsweise unmittelbar an der Dosiereinrichtung angeordnet sein, oder dieser unmittelbar benachbart sein. Sie kann beispielsweise von einem Gehäuseabschnitt der Dosiereinrichtung bereitgestellt sein oder von einem verlängerten Wandungsabschnitt der Dosiereinrichtung bereitgestellt sein. Die Positionierfläche kann aber beispielsweise auch von einer Bodenfläche eines Gebäuderaumes bereitgestellt sein, in dem die Dosiereinrichtung angeordnet ist.

Um den Dosiervorgang ordnungsgemäß initiieren zu können, ist bei einer vorteilhaften Ausgestaltung der Erfindung vorgesehen, dass das Zielgefäß an die Positionierungsfläche herangebracht oder auf diese aufgesetzt oder angesetzt werden muss. So kann insbesondere bei einer Verwendung einer Detektionseinrichtung diese eine Erkennung der Farbe mit der erforderlichen Genauigkeit und Sicherheit gewährleisten.

Gemäß einer vorteilhaften Ausgestaltung der Erfindung weist die Dosiereinrichtung mehrere Einlässe auf. Diese sind vorzugsweise jeweils mit einem Behältnis verbunden. Der Dosiereinrichtung sind also mehrere unterschiedliche Behältnisse zugeordnet. In den unterschiedlichen Behältnissen können gleiche oder unterschiedliche, zu dosierende Medien angeordnet sein. Die Dosiereinrichtung kann insbesondere ein von dem Steuergerät ansprechbares, weiter insbesondere unter Zuhilfenahme eines Motors, ansprechbares Stellglied aufweisen. In unterschiedlichen Positionen des Stellgliedes, beispielsweise in unterschiedlichen Drehpositionen des Stellgliedes, kann jeweils ein ausgewählter Einlass der Dosiereinrichtung mit dem Auslass der Dosiereinrichtung kommunikativ verbunden werden.

Hierdurch besteht die Möglichkeit, mit der Dosiereinrichtung Dosierprogramme durchzuführen, die - im Falle der Verwendung von Behältnissen mit unterschiedlichen Medien - auch sukzessive unterschiedliche Medien fördern können.

Gemäß einer weiteren vorteilhaften Ausgestaltung der Erfindung ist das Zielgefäß von einem Eimer, oder einem anderen in der Haustechnik herkömmlicherweise verwendeten Gefäß, bereitgestellt.

Alternativ kann das Zielgefäß auch von jedem anderen geeigneten Gefäß bereitgestellt sein, welches eine Bodenwand, eine umlaufende Seitenwand, und eine Öffnung aufweist, durch die hindurch Reinigungsflüssigkeit oder Desinfektionsflüssigkeit in das Zielgefäß hinein von der Dosiereinrichtung gefördert werden kann.

Als geeignete Zielgefäße kommen zum Beispiel auch Mopp-Aufbereitungsanlagen, handgetragene Sprühfläschchen, oder dergleichen in Betracht.

Gemäß einer weiteren vorteilhaften Ausgestaltung der Erfindung ist die Dosiereinrichtung fest in einem Gebäuderaum desjenigen Gebäudes angeordnet, in dem die Waschflüssigkeit, bzw. die Reinigungsflüssigkeit auch tatsächlich eingesetzt werden soll.

Gemäß einer weiteren vorteilhaften Ausgestaltung der Erfindung weist die Dosiereinrichtung einen Speicher auf. In dem Speicher sind unterschiedliche Dosierprogramme oder Informationen über unterschiedliche Dosierprogramme abgespeichert. In dem Speicher sind insbesondere unterschiedliche Dosierprogramme für unterschiedlich farbige Zielgefäße eingespeichert. Auf den Speicher kann das Steuergerät zurückgreifen, sobald das Steuergerät eine Information über die Farbe des Zielgefäßes übermittelt bekommen hat.

Die Erfindung betrifft darüber hinaus ein Verfahren zum Betreiben einer Dosiereinrichtung nach Anspruch 10.

Dieser Erfindung liegt die Aufgabe zugrunde, ein Verfahren anzugeben, mit dem eine Dosiereinrichtung so betrieben werden kann, dass die Reinigungsprozesse und/oder Desinfektionsprozesse im Bereich der Haus- und Gebäudetechnik sicherer ausgestaltet werden können.

Die Erfindung löst diese Aufgabe mit den Merkmalen des Anspruches 10, insbesondere mit denen des Kennzeichenteils. Demnach werden bei dem erfindungsgemäßen Verfahren die folgenden Schritte durchgeführt:
a) Heranbringen eines Zielgefäßes an die Dosiereinrichtung, insbesondere Positionieren des Zielgefäßes an einer Positionierungsfläche,
b) Übermitteln einer Information über die Farbe des Zielgefäßes an ein Steuergerät der Dosiereinrichtung, insbesondere durch automatisches Erkennen der Farbe des Zielgefäßes durch eine der Dosiereinrichtung zugeordnete Detektionseinrichtung,
c) Durchführen eines Dosiervorganges gemäß einem vorgegebenen Dosierprogramm an der Dosiereinrichtung durch das Steuergerät in Abhängigkeit von der übermittelten Information über die Farbe des Zielgefäßes.

Gemäß dieser Erfindung wird im ersten Schritt ein Zielgefäß an die Dosiereinrichtung herangebracht. Das Heranbringen des Zielgefäßes an die Dosiereinrichtung im Sinne dieses Merkmals bedeutet, dass das Zielgefäß unmittelbar an der, oder zumindest benachbart, oder in der Nähe der Dosiereinrichtung positioniert wird. Vorteilhafterweise wird das Zielgefäß mit seiner Öffnung unterhalb des Ausgangs oder Auslasses der Dosiereinrichtung für das Zielgefäß positioniert. Auf diese Weise kann die Dosiereinrichtung das an sie herangebrachte Zielgefäß - nach der Erkennung der Farbe des Zielgefäßes und der Bestimmung des Dosierprogrammes - im Zuge eines Dosiervorganges befüllen, ohne dass eine Re-Positionierung des Zielgefäßes relativ zur Dosiereinrichtung erforderlich ist.

Gemäß Schritt b) des Anspruches 10 wird nun eine Information über die Farbe des Zielgefäßes an ein Steuergerät der Dosiereinrichtung übermittelt. Dies kann insbesondere dadurch bewerkstelligt werden, dass eine an der Dosiereinrichtung angeordnete oder dieser zugeordnete Detektionseinrichtung automatisch die Farbe des Zielgefäßes erkennt, und sodann die erkannte Farbinformation unmittelbar oder mittelbar, codiert oder uncodiert, insbesondere über eine Signalleitung, an das Steuergerät übermittelt.

Gemäß Schritt c) des Anspruches 10 wird nun ein Dosiervorgang durchgeführt. Der Dosiervorgang wird gemäß einem vorgegebenen Dosierprogramm an der Dosiereinrichtung durchgeführt. Die Durchführung erfolgt durch das Steuergerät oder mittels des Steuergerätes, und zwar in Abhängigkeit von der übermittelten Information über die Farbe des Zielgefäßes.

Anders ausgedrückt kann das Steuergerät unterschiedliche Dosierprogramme durchführen, jeweils in Abhängigkeit der unterschiedlichen Farben des Zielgefäßes.

Weitere Vorteile der Erfindung ergeben sich anhand der nicht zitierten Unteransprüche, sowie auf der nachfolgenden Beschreibung eines in den Figuren dargestellten Ausführungsbeispiels.

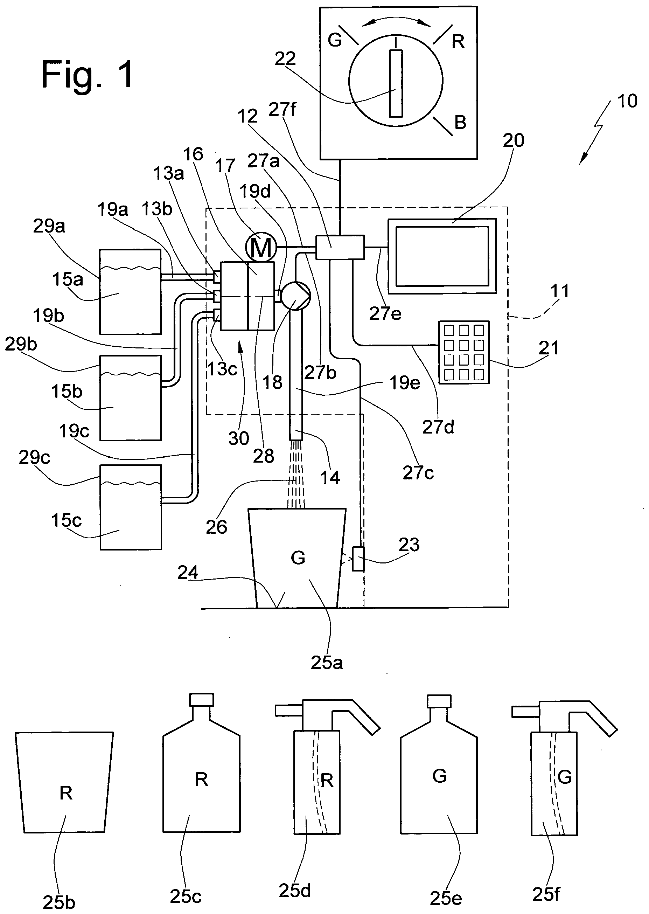

Die einzige Figur 1 zeigt in einer schematischen, blockschaltbildartigen Ansicht ein Ausführungsbeispiel einer Dosiereinrichtung mit einem an einer Positionierungsfläche positionierten Zielgefäß und beispielhaft fünf zusätzliche Zielgefäße.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind-gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Das Ausführungsbeispiel einer erfindungsgemäßen Dosiereinrichtung ist in Figur 1 in seiner Gesamtheit mit 10 bezeichnet.

Lediglich gestrichelt angedeutet ist das Gehäuse 11 der Dosiereinrichtung 10. Innerhalb des Gehäuses oder an dem Gehäuse 11 können die nachfolgend beschriebenen, zahlreichen Bauteile angeordnet sein. Angemerkt sei bereits an dieser Stelle, dass die Fig. 1 lediglich schematisch, nach Art eines Blockschaltbildes zu verstehen ist. Insbesondere die Größenverhältnisse der einzelnen Komponenten, und die Länge der Fluid- und Signalleitungen und die räumliche Anordnung der Komponenten zueinander sollen lediglich beispielhaft erläutert werden.

Die Dosiereinrichtung 10 umfasst bei dem Ausführungsbeispiel der Figur 1 ein Steuergerät 12. Dieses kann beispielsweise einen oder mehrere Mikroprozessoren enthalten. Bei dem Ausführungsbeispiel der Figur 1 ist ein Speicher in dem Steuergerät 12 integriert. Der in dieser Patentanmeldung erwähnte Speicher kann bei anderen Ausführungsbeispielen der Erfindung auch von einem gesonderten Element gebildet sein und dem Steuergerät beispielsweise zugeordnet sein.

Die erfindungsgemäße Dosiereinrichtung 10 des Ausführungsbeispiels der Figur 1 umfasst drei Einlässe 13a, 13b, 13c und einen Auslass 14, der auch als Ausgang bezeichnet wird. Bei anderen Ausführungsbeispielen, die in den Zeichnungen nicht dargestellt sind, kann die Zahl der Einlässe, bzw. und/oder auch die Zahl der Auslässe variieren.

Bei dem Ausführungsbeispiel der Figur 1 ist jedem Einlass ein Behältnis 29a, 29b, 29c eindeutig zugeordnet und über eine entsprechende Fluidleitung 19a, 19b, 19c angeschlossen. In dem Behältnis 29a befindet sich ein erstes Medium 15a, in dem Behältnis 29b ein zweites Medium 15b und in dem dritten Behältnis 29c ein drittes Medium 15c. Die drei Medien 15a, 15b, 15c können gleich oder unterschiedlich sein. Es besteht auch die Möglichkeit, dass ein Medium von Leitungswasser, destilliertem Wasser, oder dergleichen gebildet ist.

Auch besteht die Möglichkeit, dass einer der Einlässe 13a, 13b, 13c an das Hauswasserleitungsnetz angeschlossen ist.

Bei dem Ausführungsbeispiel der Figur 1 ist an der Dosiervorrichtung 10 eine insgesamt mit 30 bezeichnete Mischverteilereinrichtung angeordnet, die ein um eine Rotationsachse 28 drehbares Stellglied 16 umfasst. In dem Stellglied 16 ist ein nicht dargestellter Durchgangskanal angeordnet, der jeweils einen der Einlässe 13a, 13b 13c mit dem Fluidleitungsabschnitt 19d in kommunikative Verbindung bringen kann. Um die unterschiedlichen Drehpositionen des Stellgliedes 16 erreichen zu können, ist ein Motor 17 vorgesehen. Das Stellglied 16 ist bei dem Ausführungsbeispiel rotatorisch ausgebildet. Es kommen aber auch andere Stellglieder, beispielsweise auch linear verstellbare Stellglieder in Frage.

Der Motor 17 ist über eine Signalleitung 27a mit dem Steuergerät 12 verbunden, und kann von dem Steuergerät 12 angesprochen werden.

Stromabwärts des Stellgliedes 16 ist eine Pumpe 18 angeordnet. Diese ist über eine Signalleitung 27b mit der Steuerung 12 verbunden, und kann von dieser angesprochen werden. Stromabwärts der Pumpe 18 ist ein weiterer Fluidleitungsabschnitt 19e angeordnet, der zum Auslass 14 führt.

Das Steuergerät 12 ist über eine weitere Signalleitung 27c mit einer Detektionseinrichtung 23 verbunden. Die Detektionseinrichtung 23 ist ausweislich des Ausführungsbeispiels der Figur 1 als ein farbselektiver Sensor, z. B. ein RGB-Fotosensor, ausgebildet. Die Detektionseinrichtung 23 ist bei dem Ausführungsbeispiel in der Nähe einer Positionierungsfläche 24 angeordnet, auf der ein Gefäß 25a positioniert ist. Das Gefäß, das sogenannte Zielgefäß, ist ausweislich Figur 1 von einem Eimer 25a gebildet, der einen Boden und Seitenwände aufweist, und nach oben offen ist. Auf dem Eimer ist das Symbol "G" angeordnet, das eine grüne Farbe des Eimers 25a symbolisieren soll.

Figur 1 zeigt noch weitere Zielgefäße 25b, 25c, 25d, 25e, 25f, wobei die Gefäße 25e und 25f ebenfalls grün ausgebildet sein sollen. Die Gefäße 25b, 25c und 25d besitzen eine rote Farbe, was durch das Symbol "R" angedeutet werden soll.

Die Funktionsweise der Dosiereinrichtung 10 ist wie folgt: Im Betrieb wird ein Zielgefäß 25a grüner Farbe auf die Positionierungsfläche 24 gestellt. Die Detektionseinrichtung 23 kann die Farbe des Zielgefäßes automatisch erkennen und eine Information über die Farbe des Zielgefäßes über die Signalleitung 27c an das Steuergerät 12 übermitteln. Das Steuergerät 12 kann nun nach Erhalt dieser Farbinformation auf das in dem Speicher angeordnete Dosierprogramm und die entsprechenden Dosierinformationen zurückgreifen, und einen Dosiervorgang initiieren. Hierzu wird bedarfsweise der Motor 17 und/oder bedarfsweise die Pumpe 18 angesprochen. Durch Auswahl des entsprechenden Mediums 15a, 15b, 15c und der entsprechenden Dosiermenge, bzw. der Dosierzeitpunkte, kann - ggf. auch durch Mischen mit Wasser - die Reinigungsflüssigkeit 26 bereitgestellt, durch den Auslass 14a ausgegeben und dem Zielgefäß 25a zugeführt werden.

Wird von einer nicht dargestellten Bedienperson an Stelle des grünen Zielgefäßes 25a ein rotes Zielgefäß 25b (oder alternativ ein rotes Zielgefäß 25c oder ein rotes Zielgefäß 25d) auf der Positionierungsfläche 24 positioniert, kann die Detektionseinrichtung 23 diese andere Farbe feststellen und eine entsprechend geänderte Farbinformation an das Steuergerät 12 übermitteln. Das Steuergerät kann nach Erhalt dieser Farbinformationen ein anderes Dosierprogramm aufrufen, bzw. die Verwendung anderer, für diese Farbe rot des Zielgefäßes bestimmte Dosierinformationen für einen anderen Dosiervorgang verwenden, und entsprechend den Motor 17 und/oder die Pumpe 18 ansprechen.

Bei Ausführungsbeispielen der Erfindung kann vorgesehen sein, dass die Dosiereinrichtung 10 auch eine Einrichtung aufweist, die das Vorhandensein eines Zielgefäßes 25a, 25b, 25c, 25d, 25e, 25f auf der Positionierungsfläche 24 oder in der Nähe der Positionierungsfläche 24 erfassen kann. Dies kann beispielsweise durch einen Näherungssensor, einen Bewegungssensor, einen Tastschalter oder der gleichen bewerkstelligt werden. Wenn ein solcher Präsenzsensor die Anwesenheit eines Zielgefäßes 25a im Bereich der Positionierungsfläche 24 feststellt, kann z. B. automatisch der Farbesensor der Detektionseinrichtung 23 einen Detektionsvorgang durchführen. Dies ermöglicht eine Ausgestaltung der Dosiereinrichtung 10 derart, dass die Detektionseinrichtung 23 nicht ständig Detektionsvorgänge durchführt - verbunden mit der Gefahr, eine Falsch-Detektierung durchzuführen - sondern nur in solchen Fällen, in denen der Präsenzsensor die Anwesenheit eines Zielgefäßes zuvor bereits festgestellt hatte.

Bei anderen Ausführungsbeispielen der Erfindung ist ein solcher Präsenzsensor nicht vorhanden. Hier kann eine Farbdetektion durch die Detektionseinrichtung 23 ständig oder periodisch oder auf Anforderung durchgeführt werden. Eine solche Anforderung zur Durchführung eines Detektionsvorganges kann beispielsweise durch eine entsprechende Betätigungseinrichtung initiiert werden, die ebenfalls an der Dosiereinrichtung 10 angeordnet sein kann.

Die Dosiereinrichtung 10 des Ausführungsbeispiels der Figur 1 zeigt darüber hinaus eine Eingabevorrichtung in Form eines Farbwahlschalters 22, der über eine Signalleitung 27f mit dem Steuergerät 12 verbunden ist. Diese Bedieneinrichtung 22 kann alternativ oder zusätzlich zu der Detektionseinrichtung 23 vorgesehen sein.

Es besteht die Möglichkeit, ein Zielgefäß 25a, 25b, 25c, 25d, 25e, 25f einer vorherbestimmten Farbe an der Positionierungsfläche 24 zu positionieren. Sodann kann die Bedienperson durch Betätigung des Farbwahlschalters und Umstellung auf ein entsprechendes Symbol (G, R oder B für die Farben grün, rot oder blau) das Dosierprogramm entsprechend wählen.

Die Eingabevorrichtung oder Bedienvorrichtung 22 in Form des Farbwahlschalters 22 gemäß Fig. 1 kann ausschließlich an der Dosiereinrichtung 10 vorgesehen sein, ohne, dass eine Detektionseinrichtung 23 erforderlich ist. Hier ist es insoweit der Bedienperson überlassen, die Farbe des Zielgefäßes unmittelbar über die Bedienvorrichtung 22 an der Dosiereinrichtung 10 einzustellen, oder einzugeben.

Eine solche Bedieneinrichtung mit einem Farbwahlschalter 22 kann aber auch zusätzlich zu einer Detektionseinrichtung 23 vorgesehen sein, um die Prozesssicherheit weiter zu erhöhen.

Schließlich kann bei weiteren Ausführungsbeispielen der Erfindung an der Dosiereinrichtung zwar eine Detektionseinrichtung 23 vorgesehen sein, ohne, dass eine Bedieneinrichtung mit einem Farbwahlschalter 22 vorgesehen ist.

Ausweislich Figur 1 kann bei der Dosiereinrichtung darüber hinaus ein Display 20 vorgesehen sein. Dieses Display kann beispielsweise - gegebenenfalls nur auf Abruf - die abgespeicherten oder aktuellen Dosierinformationen anzeigen. Gegebenenfalls kann auch die eingegebene oder die erkannte Farbe angezeigt werden, um der Bedienperson eine Überprüfung der richtigen Farbauswahl zu ermöglichen. Das Display 20 ist über die Signalleitung 27e mit dem Steuergerät 12 verbunden. Das Display 20 kann auch als Touch-Screen-Display ausgebildet sein, und insoweit eine interaktive Schnittstelle für die Bedienperson bereitstellen, an der beispielsweise auch Farbinformationen eingegeben werden können.

Ausweislich des Ausführungsbeispiels der Figur 1 kann bei der Dosiereinrichtung 10 darüber hinaus eine Bedieneinrichtung 21 vorgesehen sein, die die Eingabe alphanummerischer Zeichen ermöglicht. Beispielsweise kann die Bedieneinrichtung 21, die wiederum zusätzlich oder alternativ zu der Detektionseinrichtung 23 und/oder zusätzlich oder alternativ zu dem Programmwahlschalter 22 vorgesehen ist, die Eingabe der Farben durch beispielsweise eine Buchstabenfolge GRÜN unmittelbar erlauben. Diese Eingabe kann dann auch auf dem Display 20 angezeigt werden.

Die unterschiedlichen Schnittstellen in Form der Detektionseinrichtung 23, des Programmwahlschalters 22, der Bedieneinrichtung 21 und auch des Displays 20 sollen veranschaulichen, dass eine Vielzahl unterschiedlicher Arten der Farbinformationserfassung und -übermittlung in Betracht kommen.

Die Funktionsweise der Dosiereinrichtung 10 stellt jedenfalls sicher, dass Gefäße gleicher Farbe, unter Umständen auch unabhängig von ihrer Gefäßform oder Gefäßausbildung, immer mit der gleichen Reinigungslösung, bzw. Desinfektionslösung befüllt werden können.

## Patentansprüche

1. Dosiereinrichtung (10) zur Bereitstellung einer Reinigungs- oder Desinfektionslösung (26) und zu deren Abgabe in ein Zielgefäß (25a), insbesondere zur Anwendung in der Gebäudetechnik, umfassend wenigstens einen Eingang (13a, 13b, 13c) zur Verbindung mit einem Behältnis (29a, 29b, 29c), in dem ein zu dosierendes Medium (15a, 15b, 15c) angeordnet ist, und wenigstens einen Ausgang (14) zur Abgabe an das Zielgefäß, weiter umfassend ein Steuergerät und wenigstens eine Pumpe (18), die von dem Steuergerät (12) ansprechbar ist, **dadurch gekennzeichnet, dass** mit dem Steuergerät in Abhängigkeit von einer dem Steuergerät übermittelten Information über die Farbe (R, G, B) des Zielgefäßes unterschiedliche Dosierprogramme durchführbar sind.

2. Dosiereinrichtung nach Anspruch 1, **dadurch gekennzeichnet, dass** die Dosiereinrichtung (10) eine Bedieneinrichtung (21) zur manuellen Eingabe und/oder zur manuellen Auswahl der Farbe des Zielgefäßes oder einer Information über die Farbe des Zielgefäßes umfasst.

3. Dosiereinrichtung nach Anspruch 1, **dadurch gekennzeichnet, dass** die Dosiereinrichtung eine Detektionseinrichtung (23) zur automatischen Erkennung der Farbe des Zielgefäßes umfasst.

4. Dosiereinrichtung nach Anspruch 2 oder 3, **dadurch gekennzeichnet, dass** die Bedieneinrichtung (21) oder die Detektionseinrichtung (23) mit dem Steuergerät (12) verbunden ist.

5. Dosiereinrichtung nach einem der vorangegangenen Ansprüche, **dadurch gekennzeichnet, dass** der Dosiereinrichtung (10) eine Positionierfläche (24) für das Zielgefäß zugeordnet ist.

6. Dosiereinrichtung nach einem der vorangegangenen Ansprüche, **dadurch gekennzeichnet, dass** die Dosiereinrichtung mehrere Eingänge (13a, 13b, 13c) aufweist, die jeweils mit einem Behältnis (20a, 29b, 29c), in dem ein zu dosierendes Medium (15a, 15b, 15c) angeordnet ist, in kommunikativer Verbindung stehen, wobei insbesondere der Dosiereinrichtung mehrere Behältnisse für unterschiedliche Medien (15a, 15b, 15c) zugeordnet sind.

7. Dosiereinrichtung nach einem der vorangegangenen Ansprüche, **dadurch gekennzeichnet, dass** die Dosiereinrichtung (10) fest, insbesondere wandseitig fest, in einem Raum des Gebäudes angeordnet ist, in dem die Reinigungs- oder Desinfektionslösung eingesetzt wird.

8. Dosiereinrichtung nach einem der vorangegangenen Ansprüche, **dadurch gekennzeichnet, dass** an der Dosiereinrichtung ein dem Steuergerät (12) zugeordneter Speicher angeordnet ist, in dem unterschiedliche Dosierprogramme für unterschiedliche Farben eines Zielgefäßes gespeichert sind.

9. Verfahren zum Betreiben einer Dosiereinrichtung (10) zur Bereitstellung einer Reinigungs- oder Desinfektionslösung (26), insbesondere zur Anwendung in der Gebäudetechnik, insbesondere zum Betreiben einer Dosiereinrichtung nach einem der vorangegangenen Ansprüche, **gekennzeichnet durch** die folgenden Schritte:
a) Heranbringen eines Zielgefäßes (25a) an die Dosiereinrichtung (10), insbesondere Positionieren des Zielgefäßes an einer oder nahe einer Positionierungsfläche (24),
b) Übermitteln einer Information über die Farbe (R, G, B) des Zielgefäßes (25a) an ein Steuergerät (12) der Dosiereinrichtung, insbesondere durch automatisches Erkennen der Farbe des Zielgefäßes durch eine der Dosiereinrichtung zugeordnete Detektionseinrichtung (23),
c) Durchführen eines Dosiervorganges gemäß einem vorgegebenen Dosierprogramm an der Dosiereinrichtung (10) durch das Steuergerät (12) in Abhängigkeit von der übermittelten Information über die Farbe des Zielgefäßes.

## Claims

1. Dosing device (10) for providing a cleaning or disinfection solution (26) and for dispensing the latter into a target vessel (25a), in particular for use in building technology, comprising at least one input (13a, 13b, 13c) for connection with a container (29a, 29b, 29c) in which a medium to be dosed (15a, 15b, 15c) is arranged, and at least one output (14) for dispensing to the target vessel, further comprising a control device and at least one pump (18) that can be accessed by the control device (12), **characterised in that** different dosing programmes can be carried out with the control device depending on information transmitted to the control device about the colour (R, G, B) of the target vessel.

2. Dosing device according to claim 1, **characterised in that** the dosing device (10) comprises an operating device (21) for manually inputting and/or manually selecting the colour of the target vessel or information about the colour of the target vessel.

3. Dosing device according to claim 1, **characterised in that** the dosing device comprises a detection device (23) for automatically recognising the colour of the target vessel.

4. Dosing device according to claim 2 or 3, **characterised in that** the operating device (21) or the detection device (23) is connected to the control device (12).

5. Dosing device according to one of the preceding claims, **characterised in that** a positioning surface (24) for the target vessel is assigned to the dosing device (10).

6. Dosing device according to one of the preceding claims, **characterised in that** the dosing device has several inputs (13a, 13b, 13c) that are respectively in communicative connection with a container (20a, 29b, 29c) in which a medium (15a, 15b, 15c) to be dosed is arranged, wherein in particular several containers for different media (15a, 15b, 15c) are assigned to the dosing device.

7. Dosing device according to one of the preceding claims, **characterised in that** the dosing device (10) is arranged fixed, in particular fixed on the wall, in a room in the building, in which the cleaning or disinfection solution is used.

8. Dosing device according to one of the preceding claims, **characterised in that** a storage device assigned to the control device (12) is arranged on the dosing device, different dosing programmes for different colours of a target vessel being stored in said storage device.

9. Method for operating a dosing device (10) for providing a cleaning or disinfection solution (26), in particular for use in building technology, in particular for operating a dosing device according to one of the preceding claims, **characterised by** the following steps:
a) bringing a target vessel (25a) to the dosing device (10), in particular positioning the target vessel on or near to a positioning surface (24),
b) transmitting information about the colour (R, G, B) of the target vessel (25a) to a control device (12) of the dosing device, in particular by automatically recognising the colour of the target vessel via a detection device (23) assigned to the dosing device,
c) carrying out a dosing process according to a pre-determined dosing programme in the dosing device (10) via the control device (12) depending on the information transmitted about the colour of the target vessel.

## Revendications

1. Dispositif de dosage (10) pour la préparation d'une solution de nettoyage ou de désinfection (26) et pour son rejet dans un récipient cible (25a), en particulier pour son utilisation dans la technique du bâtiment, comprenant au moins une entrée (13a, 13b, 13c) pour le relier avec un conteneur (29a, 29b, 29c) dans lequel un fluide à doser (15a, 15b, 15c) est placé, et au moins une sortie (14) pour le rejet dans le récipient cible, comprenant en outre un appareil de commande et au moins une pompe (18) à laquelle l'appareil de commande (12) peut s'adresser, **caractérisé en ce que** différents programmes de dosage peuvent être exécutés avec l'appareil de commande en fonction d'une information sur la couleur (R, G, B) du récipient cible transmise à l'appareil de commande.

2. Dispositif de dosage selon la revendication 1, **caractérisé en ce que** ce dispositif de dosage (10) comprend un dispositif de manoeuvre (21) pour l'entrée manuelle et/ou pour la sélection manuelle de la couleur du récipient cible ou d'une information sur la couleur du récipient cible.

3. Dispositif de dosage selon la revendication 1, **caractérisé en ce que** ce dispositif de dosage comprend un dispositif de détection (23) pour l'identification automatique de la couleur du récipient cible.

4. Dispositif de dosage selon la revendication 2 ou 3, **caractérisé en ce que** ce le dispositif de manoeuvre (21) ou le dispositif de détection (23) est relié avec l'appareil de commande (12).

5. Dispositif de dosage selon une des revendications précédentes, **caractérisé en ce qu'**une surface de positionnement (24) pour le récipient cible est associée à ce dispositif de dosage (10).

6. Dispositif de dosage selon une des revendications précédentes, **caractérisé en ce que** ce dispositif de dosage (10) comporte plusieurs entrées (13a, 13b, 13c) qui sont chacune en communication avec un conteneur (20a, 29b, 29c) dans lequel un fluide à doser (15a, 15b, 15c) est placé, en particulier plusieurs conteneurs destinés à différents fluides (15a, 15b, 15c) étant associés au dispositif de dosage.

7. Dispositif de dosage selon une des revendications précédentes, **caractérisé en ce que** ce dispositif de dosage (10) est fixé, en particulier fixé du côté mur, dans un local du bâtiment dans lequel la solution de nettoyage ou de désinfection est utilisée.

8. Dispositif de dosage selon une des revendications précédentes, **caractérisé en ce que** sur ce dispositif de dosage est agencée une mémoire associée à l'appareil de commande (12) dans laquelle différents programmes de dosage pour différentes couleurs du récipient cible sont mémorisés.

9. Procédé pour l'exploitation d'un dispositif de dosage (10) pour la préparation d'une solution de nettoyage ou de désinfection (26), en particulier pour son application dans la technique du bâtiment, en particulier pour l'exploitation d'un dispositif de dosage selon une des revendications précédentes, **caractérisé par** les étapes suivantes :
a) présentation d'un récipient cible (25a) au dispositif de dosage (10), en particulier positionnement du récipient cible sur ou à proximité d'une surface de positionnement (24),
b) transmission d'une information sur la couleur (R, G, B) du récipient cible (25a) à un appareil de commande (12) du dispositif de dosage, en particulier par l'identification automatique de la couleur du récipient cible par un dispositif de détection (23) associé au dispositif de dosage et
c) exécution d'une opération de dosage selon un programme de dosage prédéfini sur le dispositif de dosage (10) par l'appareil de commande (12) en fonction de l'information transmise sur la couleur du récipient cible.
